# EUROPÄISCHE PATENTANMELDUNG

(11) **EP 2 353 973 A2**
(43) Veröffentlichungstag der Anmeldung: **10.08.2011**
(21) Anmeldenummer: 11000535.2
(22) Anmeldetag: 24.01.2011
(51) Int. Cl.: B62D 25/06

(54) **Kraftfahrzeug mit selbst lösbarem Dach für schwere Unfallsituationen**

(30) Priorität: 28.01.2010 DE 102010006225
(71) Anmelder: GEDIA Gebrüder Dingerkus GmbH, 57439 Attendorn (DE)
(72) Erfinder: Buhr, Wolfgang, 57076 Siegen (DE); Strautz, Josef, 57439 Attendorn (DE); Rockenberg, Manuela, 51702 Bergneustadt (DE); Köster, Manuel, 51647 Gummersbach (DE); Bömer, Heiko, 58840 Plettenberg (DE); Vogt, Karl-Ulrich, 57462 Olpe (DE)
(74) Vertreter: Köchling, Conrad-Joachim

(57) **Zusammenfassung**

Um ein Kraftfahrzeug mit einer Karosserie mit Türen und einem Dachteil zu schaffen, bei dem das Öffnen der Karosserie nach einem Unfall in einfacher Weise ermöglicht wird, um Passagiere zu retten, wird vorgeschlagen, dass das Dachteil ein mit einem oberen Abschlussrahmen einer Frontscheibe, mit dem oberen Abschlussrahmen einer Heckscheibe oder einer Hecktür sowie mit den Enden der B-Säulen und/oder C-Säulen und/oder D-Säulen lösbar verriegeltes Rahmenteil ist oder umfasst, welches insbesondere im Falle eines Fahrzeugcrashs unter Öffnung der Verriegelung von der Karosserie abnehmbar ist.

## Beschreibung

Die Erfindung betrifft ein Kraftfahrzeug mit einer Karosserie mit Türen und einem Dachteil.

Kraftfahrzeuge dieser Art, insbesondere Personenkraftfahrzeuge sind im Stand der Technik hinreichend bekannt. Im Falle einer Verunfallung eines entsprechenden Fahrzeuges, insbesondere Personenfahrzeuges, besteht ein großes Problem darin, dass Personen, die sich in verunfallten Fahrzeugen befinden, von Rettungskräften nur schwierig aus dem Fahrzeugwrack befreit werden können. Bei stark verunfallten Fahrzeugen ist es dabei üblich, das Rettungskräfte mittels Rettungsscheren oder dergleichen Werkzeugen Fahrzeugteile aufschneiden, um Karosserieteile zu entfernen, damit die Zugänglichkeit zu den in den Fahrzeug befindlichen Personen möglich ist. Häufig werden dabei mit Rettungsscheren Teile des Fahrzeuges aufgetrennt, wie beispielsweise Bereiche der A-Säule, der B-Säule oder der C-Säule eines Fahrzeuges. Dies wird aber im zunehmenden Maße schwieriger, weil heutige Fahrzeuge häufig, insbesondere im Bereich der Säulen, also der A-,B-, C-Säulen oder auch D-Säulen aus hochfesten Stählen gefertigt sind, die mit Rettungsscheren praktisch nicht durchzutrennen sind.

Ausgehend von diesem Stand der Technik liegt der Erfindung die Aufgabe zugrunde, ein Kraftfahrzeug gattungsgemäßer Art zu schaffen, bei dem das Öffnen der Karosserie nach einem Unfall in einfacher Weise ermöglicht wird, um Passagiere zu retten.

Zur Lösung dieser Aufgabe schlägt die Erfindung vor, dass das Dachteil ein mit einem oberen Abschlussrahmen einer Frontscheibe, mit dem oberen Abschlussrahmen einer Heckscheibe oder einer Hecktür sowie mit den Enden der B-Säulen und/oder C-Säulen und/oder D-Säulen lösbar verriegeltes Rahmenteil ist oder umfasst, welches insbesondere im Falle eines Fahrzeugcrashs unter Öffnung der Verriegelung von der Karosserie abnehmbar ist.

Das Dachteil kann beispielsweise ein in sich geschlossenes Rahmenteil sein, wobei Werkstoffe üblicher Art eingesetzt werden können, also Stahl, Kunststoff, Glas und/oder Kombinationen hieraus. Durch entsprechende konstruktive Gestaltung und Materialauswahl kann das Gewicht des Dachelementes und damit das Gewicht der Gesamtkarosserie gemindert werden.

Das Dachteil liegt in einem ersten Aufnahmebereich am oberen Abschlussrahmen der Frontscheibe dicht auf, also oberhalb der Frontscheibe. Das Dachteil kann sich mit seinem Rahmen über alle Sitzplätze erstrecken, also je nach Art des Fahrzeuges bis zur B-Säule, C-Säule oder D-Säule. Im hinteren Bereich ist ein weiterer Auflagebereich des Rahmenteiles oberhalb der Heckscheibe oder, sofern vorhanden, oberhalb einer Hecktür des Fahrzeuges vorgesehen. Das Rahmenteil ist vorzugsweise mit sämtlichen Anlagebereichen lösbar verriegelt. Hierdurch ist einerseits sichergestellt, dass im Normalgebrauch das Fahrzeug in üblicher Weise gestaltet und bewegt werden kann, ohne dass das Dachteil sich lösen kann. Nur in besonderen Fällen, beispielsweise im Falle eines Fahrzeugcrashs soll das Dachteil unter Öffnung der Verriegelung von der Karosserie abnehmbar sein.

Es ist nicht vorgesehen, dass das Dachteil im Falle eines Fahrzeugcrashs oder dergleichen zwangsläufig entriegelt und abgesprengt wird, da es Situationen gibt, in denen entweder der Fahrzeugcrash noch nicht beendet ist, also beispielsweise das Fahrzeug sich noch bewegt oder überschlägt, so dass die Öffnung des Daches für die Insassen gefährlich wäre. Oder aber es gibt auch Möglichkeiten, in denen nicht ein Fahrzeugcrash der Auslöser sein soll, sondern andere Bedingungen, beispielsweise ein Brand des Fahrzeuges oder der Fall, dass ein Fahrzeug in ein Gewässer fährt und die Insassen eine Notentriegelung des Dachteiles vornehmen müssen.

In jedem Falle ist das Dachteil so vorbereitet und mit der übrigen Karosserie verriegelt, dass es im Notfall unter Öffnung der Verriegelung abnehmbar ist. Um zu vermeiden, dass ein derart ausgestattetes Kraftfahrzeug von unbefugter Hand geöffnet werden kann, indem die Verriegelung des Dachteiles gelöst wird, ist die Verriegelung vorzugsweise nur unter mehrfachen Und-Verknüpfungen zu lösen, beispielsweise unter der Und-Verknüpfung Fahrzeugcrash und Manipulation von Rettungskräften oder unter der Und-Verknüpfung Fahrzeugbrand oder Fahrzeuguntergang im Wasser, Erfassung der Temperatur beziehungsweise des Wassereinbruchs und mögliche Zwangsentriegelung des Dachteiles durch Insassen des Fahrzeuges durch in diesen Fällen freigegebene Verschlussmechanismen.

Bevorzugt ist vorgesehen, dass die karosserieseitigen Verbindungsteile, nämlich Abschlussrahmen, sowie die B-,C- und/oder D-Säulen, aktive Verriegelungsteile aufweisen, die vorzugsweise im Crashfall entriegelbar sind, und die dachseitigen Verbindungsteile passive Verriegelungsteile aufweisen.

Unter den Begriff von aktiven Verriegelungsteilen werden bewegliche Verriegelungsteile verstanden, beispielsweise Schubriegel, Drehriegel oder andere Verschlussmechanismen. Unter dem Begriff passive Verriegelungsteile werden entsprechende Einschuböffnungen für Riegel, Laschen für Drehriegel oder andere stationäre Elemente verstanden. Der Vorteil, der sich daraus ergibt, dass die aktiven Verriegelungsteile in karosserieseitigen Elementen installiert sind und die passiven Verriegelungsteile am dachseitigen Element angeordnet sind, besteht darin, dass die aktiven Verriegelungsteile beispielsweise in einfacher Weise durch die Bordelektrik oder Bordelektronik des Fahrzeuges betätigbar sind und gesteuert werden können. Die Verbindung mit diesen Teilen ist in einfacher Weise beispielsweise durch die A-Säule, B-Säule, C-Säule oder D-Säule hin zu der entsprechenden Steuerelektronik möglich. Die dachseitigen passiven Verriegelungsteile benötigen keine entsprechende elektrische Verbindung oder elektronische Verbindung, sondern sie sind lediglich mit den entsprechenden karosserieseitigen Verriegelungsteilen mechanisch wirkverbunden.

Besonders bevorzugt ist dabei vorgesehen, dass die aktiven Verriegelungsteile mit einem Aktor lösbar sind, insbesondere mit einem pyrotechnischen und/oder pneumatischen und/oder elektrischen und/oder hydraulischen und/oder mechanischen Auslöser.

Solche Aktoren sind im Stand der Technik üblich und bekannt, sie dienen beispielsweise zur Betätigung von Überrollbügeln, Fußgängerschutzeinrichtungen oder anderen Einrichtungen. Solche Elemente sind auch für die Entriegelung der Verriegelungsteile einsetzbar.

Besonders bevorzugt ist dabei vorgesehen, dass die Verriegelungsteile und/oder die Aktoren mit einer Entriegelungssperre blockiert sind, deren Blockierung vorzugsweise mittels Crashsensoren freigebbar ist, wenn diese einen Crash erfassen oder erfasst haben.

Dadurch, dass die Verriegelungsteile und/oder die Aktoren mit einer Entriegelungssperre blockiert sind, wird erreicht, dass bei Normalgebrauch des Fahrzeuges diese nicht zugänglich sind, auch nicht von unbefugter Hand, so dass beispielsweise eine Betätigung der Verriegelung zum Zwecke des Einbruchs in das Kraftfahrzeug nicht möglich ist. Erst dann, wenn die Blockierung mittels entsprechender Sensoren freigegeben wird, beispielsweise mittels eines Crashsensors, sind die Verriegelungsteile zugänglich und die Aktoren betätigbar. Die Betätigung erfolgt nicht automatisch, sondern durch eine zusätzliche Handlung, beispielsweise durch eine Betätigung durch Rettungskräfte, die in einem verunfallten Fahrzeug befindliche Personen retten wollen.

Besonders bevorzugt ist zudem vorgesehen, dass die Verriegelung manuell oder automatisch durch Aktoren nur bei freigegebener Blockierung betätigbar insbesondere entriegelbar ist.

Auch hierdurch soll sichergestellt werden, dass die Verriegelung, sei dies nun manuell oder automatisch durch Aktoren oder dergleichen, nur dann betätigbar, also entriegelbar ist, wenn die Blockierung freigegeben ist.

Eine besondere Weiterbildung hierzu wird darin gesehen, dass die Blockierungseinrichtung in der Normalgebrauchslage (Blockierstellung) eine Zugriffsöffnung versperrt, hinter der ein Auslöser für die Verriegelungsteile und/oder deren Aktoren angeordnet ist, und dass die Blockierungseinrichtung in einer Notfalllage, zum Beispiel nach einem Crash des Kraftfahrzeugs, die Zugriffsöffnung freigibt, so dass der Auslöser und/oder die Aktoren mittels eines Werkzeuges oder dergleichen Handhabungsteiles betätigbar ist.

Im Normalgebrauch wird die Zugriffsöffnung durch die Blockierungseinrichtung versperrt, so dass ein unbefugter Zugriff oder ein zufälliger Zugriff vermieden ist. Nur in einer Notfalllage, beispielsweise nach einer entsprechenden Negativbeschleunigung des Fahrzeuges, die durch Sensoren erkannt wird, wird die Zugriffsöffnung freigelegt, indem die Blockierungseinrichtung durch ein Sensorsignal aktiviert beziehungsweise betätigt wird und in die Freigabestellung verstellt wird.

In diesem Falle ist dann die entsprechende Zugriffsöffnung freigelegt. Rettungskräfte können dann durch die freigelegte Zugriffsöffnung Auslöser und/oder Aktoren betätigen, wozu beispielsweise ein Schraubendreher oder ein ähnliches Werkzeug genügt, so dass dann die Entriegelung des Daches erfolgt und das Dach von der Karosserie gelöst werden kann.

Als zusätzliches Element kann vorgesehen sein, dass die Verriegelungsteile und/oder die Aktoren und/oder die Entriegelungssperre und/oder die Blockierungseinrichtung mittels eines im Fahrgastraum des Kraftfahrzeuges angeordneten Schlüsselschalters betätigbar oder aktivierbar sind, der vorzugsweise mit dem Zündschlüssel des Kraftfahrzeuges bedienbar ist.

Diese Ausbildung dient dazu, den Insassen des Fahrzeuges auch eine Möglichkeit zu schaffen, im Notfall das Dach entfernen zu können. Um auch hier einen Missbrauch zu unterbinden, ist die Aktivierung über den Schlüsselschalter nur mit dem Zündschlüssel möglich. Durch eine entsprechende Kopplung mit der Steuerelektronik wird dabei sichergestellt, dass bei entriegeltem Dach der Motor des Fahrzeuges nicht mehr gestartet werden kann. Dies ist in einfacher Weise durch eine elektronische Absicherung ermöglicht.

In jedem Falle kann bei dieser Ausgestaltung auch das Dach durch die Insassen entfernt werden, wenn beispielsweise das Fahrzeug zwischen anderen Fahrzeugen oder an Leitplanken eingeklemmt ist und die Türen nicht zu öffnen sind, so dass der Ausstieg nur über das Dach möglich ist. Andere Situationen ergeben sich dann, wenn beispielsweise das Fahrzeug in ein Gewässer gestürzt ist. Auch andere Gefahrensituationen sind denkbar, bei denen die Insassen möglichst schnell durch eigene Aktivität das Dach entfernen können müssen.

Die erfindungsgemäße Gestaltung ermöglicht die übliche Anbindung des Daches beziehungsweise dessen Rahmen an crashrelevante Bauteile, insbesondere die A-,B-,C-Säulen.

Um auch eine Abdichtung zum Fahrgastraum hin zu erreichen, kann vorgesehen sein, dass die Türen mit Fensterrahmen ausgebildet sind und das Dachteil dicht mit den Karosserierahmenteilen, den Säulenenden und den Fensterrahmen lösbar verbunden ist oder aber dass die Türen rahmenlos, - ohne Scheibenrahmen, ausgebildet sind und das Dachteil die Rahmenleisten und Dichtungen der Scheiben aufweist.

Je nach Ausstattung können die oberen Dichtungen in dem Türrahmen angeordnet sein, sofern dieser denn vorhanden ist, oder aber wenn kein Türrahmen vorhanden ist, können diese in den Dachrahmen integriert sein.

Insgesamt ermöglicht die Erfindung eine gute Zugänglichkeit von verunfallten Personen, die sich innerhalb eines Fahrzeuges befinden, durch Rettungskräfte oder auch eine Selbstrettung der Fahrzeuginsassen bei verunfallten Fahrzeugen, bei denen ein Ausstieg durch die Türen nicht möglich ist.

Bei dem im Stand der Technik bekannten Fahrzeugen kann eine Schnellrettung mehr als sieben Minuten dauern und eine so genannte patientengerechte Rettung mehr als zwanzig Minuten dauern.

Bei der erfindungsgemäßen Ausgestaltung ist es möglich, das Dach innerhalb weniger Sekunden zu entfernen und so einen schnellen Zugang zu den Fahrzeuginsassen zu ermöglichen, sofern deren Rettung erforderlich ist oder diese sich selbst retten können.

Vorzugsweise ist eine weitere Kopplung der Aktoren und dergleichen Elemente vorgesehen, wonach nämlich diese Elemente nur bei abgeschaltetem Motor betätigbar sind. Bei Fahrzeugen, bei denen im Falle eines Unfalls eine automatische Trennung der Batterie vom Bordnetz erfolgt, ist bei elektrisch betätigten Elementen oder elektrischen Auslösern eine zusätzliche stromführende Verbindung zwischen Batterie und Auslösern oder Aktoren erforderlich, um die entsprechenden Aggregate auszulösen und das Dach entfernen zu können.

Andere Weiterbildungen sind im Rahmen der Erfindung möglich.

## Patentansprüche

1. Kraftfahrzeug mit einer Karosserie mit Türen und einem Dachteil, **dadurch gekennzeichnet, dass** das Dachteil ein mit einem oberen Abschlussrahmen einer Frontscheibe, mit dem oberen Abschlussrahmen einer Heckscheibe oder einer Hecktür sowie mit den Enden der B-Säulen und/oder C-Säulen und/oder D-Säulen lösbar verriegeltes Rahmenteil ist oder umfasst, welches insbesondere im Falle eines Fahrzeugcrashs unter Öffnung der Verriegelung von der Karosserie abnehmbar ist.

2. Kraftfahrzeug nach Anspruch 1, **dadurch gekennzeichnet, dass** die karosserieseitigen Verbindungsteile, nämlich Abschlussrahmen, sowie die B-,C- und/oder D-Säulen, aktive Verriegelungsteile aufweisen, die vorzugsweise im Crashfall entriegelbar sind, und die dachseitigen Verbindungsteile passive Verriegelungsteile aufweisen.

3. Kraftfahrzeug nach Anspruch 2, **dadurch gekennzeichnet, dass** die aktiven Verriegelungsteile mit einem Aktor lösbar sind, insbesondere mit einem pyrotechnischen und/oder pneumatischen und/oder elektrischen und/oder hydraulischen und/oder mechanischen Auslöser.

4. Kraftfahrzeug nach einem der Ansprüche 1 bis 3, **dadurch gekennzeichnet, dass** die Verriegelungsteile und/oder die Aktoren mit einer Entriegelungssperre blockiert sind, deren Blockierung vorzugsweise mittels Crashsensoren freigebbar ist, wenn diese einen Crash erfassen oder erfasst haben.

5. Kraftfahrzeug nach Anspruch 4, **dadurch gekennzeichnet, dass** die Verriegelung manuell oder automatisch durch Aktoren nur bei freigegebener Blockierung betätigbar insbesondere entriegelbar ist.

6. Kraftfahrzeug nach einem der Ansprüche 1 bis 5, **dadurch gekennzeichnet, dass** die Blockierungseinrichtung in der Normalgebrauchslage (Blockierstellung) eine Zugriffsöffnung versperrt, hinter der ein Auslöser für die Verriegelungsteile und/oder deren Aktoren angeordnet ist, und dass die Blockierungseinrichtung in einer Notfalllage, zum Beispiel nach einem Crash des Kraftfahrzeugs, die Zugriffsöffnung freigibt, so dass der Auslöser und/oder die Aktoren mittels eines Werkzeuges oder dergleichen Handhabungsteiles betätigbar ist.

7. Kraftfahrzeug nach einem der Ansprüche 1 bis 6, **dadurch gekennzeichnet, dass** die Verriegelungsteile und/oder die Aktoren und/oder die Entriegelungssperre und/oder die Blockierungseinrichtung mittels eines im Fahrgastraum des Kraftfahrzeuges angeordneten Schlüsselschalters betätigbar oder aktivierbar sind, der vorzugsweise mit dem Zündschlüssel des Kraftfahrzeuges bedienbar ist.

8. Kraftfahrzeug nach einem der Ansprüche 1 bis 7, **dadurch gekennzeichnet, dass** die Türen mit Fensterrahmen ausgebildet sind und das Dachteil dicht mit den Karosserierahmenteilen, den Säulenenden und den Fensterrahmen lösbar verbunden ist.

9. Kraftfahrzeug nach einem der Ansprüche 1 bis 7, **dadurch gekennzeichnet, dass** die Türen rahmenlos, - ohne Scheibenrahmen, ausgebildet sind und das Dachteil die Rahmenleisten und Dichtungen der Scheiben aufweist.
